# EUROPEAN PATENT SPECIFICATION

(11) **EP 4 246 475 B1**
(45) Date of publication and mention of the grant of the patent: **01.04.2026**
(21) Application number: 23158691.8
(22) Date of filing: 27.02.2023
(51) Int. Cl.: G07D 11/25, G07D 11/12, G07D 11/24

(54) **AUTOMATED TELLER MACHINE AND METHOD OF CONTROLLING THE SAME**
BANKAUTOMAT UND VERFAHREN ZUR STEUERUNG DAVON
GUICHET AUTOMATIQUE BANCAIRE ET SON PROCÉDÉ DE COMMANDE

(30) Priority: 16.03.2022 KR 20220032910
(43) Date of publication of application: 20.09.2023
(73) Proprietor: HYOSUNG TNS INC., Seoul 06349 (KR)
(72) Inventor: SHIN, Dahye, 06349 Seoul (KR); LIM, Jin Yu, 06349 Seoul (KR); JANG, Hyun Soo, 06349 Seoul (KR); KIM, Seungki, 06349 Seoul (KR)
(74) Representative: V.O.

(56) References cited:
- EP-A1- 3 480 795
- KR-A- 20210 081 121

## Description

### TECHNICAL FIELD

The present disclosure relates to an automated teller machine and a method of controlling the same.

### BACKGROUND

An automated teller machine (ATM) is a device installed in a place other than a window in a financial institution such as a bank so that customers can conveniently use various financial services without restriction of time and place. The automated teller machine can provide various financial services such as cash deposit/withdrawal, account transfer, balance inquiry, and passbook printing.

Such an automated teller machine may include therein a medium storage box for storing mediums such as cash or checks, and a proper amount of mediums may be stored in the medium storage box. A medium stored in the medium storage box may be discharged from the medium storage box by a customer's request for withdrawal, and a new medium may be introduced into the medium storage box by a customer's request for deposit. As such, a proper amount of the mediums stored in the medium storage box need to be maintained in preparation for a customer's request for deposit or withdrawal, and it is necessary to manage and monitor whether a proper amount of mediums is stored in the medium storage box in real time.

However, when a management company for replenishing the automated teller machine with mediums is far away from the automated teller machine, it is not easy for the management company to manage the amount of mediums in the automated teller machine in real time.

For example, in the case that the mediums in the automated teller machine are insufficient, the automated teller machine may be replenished with mediums through a customer's deposit while a person of the management company goes to replenish the automated teller machine with new mediums. Further, in the case that the mediums in the automated teller machine are sufficient, the mediums in the automated teller machine may become insufficient through a customer's withdrawal.

Further, in the automated teller machine, it may be difficult to selectively replenish the medium storage box of the automated teller machine with only normal banknotes among replenishment banknotes in a transit cassette. In addition, it may be difficult to transfer rejection banknotes included in the replenishment banknotes back to the transit cassette.

EP 3 480 795 A1 disclosed a banknote handling apparatus including a transporter which includes a first route for the money that passes through a recognition unit and a second route for the money that does not pass through the recognition unit, and wherein the transporter is operable to transport the money from a first storage to a second storage along either the first route or the second route. It further comprises a controller which, in a process of storing the money fed from the first storage into the second storage, selects either the first route or the second route for the money in accordance with a specific condition.

### SUMMARY

In view of the above, the present disclosure provides an automated teller machine and a method of controlling the same, which are capable of replenishing a recycle cassette with replenishment banknotes in a transit cassette connected to a rear portion of a main body, and recovering a medium stored in the recycle cassette through the transit cassette connected to the rear portion of the main body.

In accordance with a first aspect of the present disclosure, there is provided an automated teller machine according to claim 1 comprising a main body having an entrance for replenishment and recovery for connecting a transit cassette; a reception unit for depositing or withdrawing of a medium; a temporary holding unit for temporarily storing the medium; an identification unit serving to identify whether a medium is a normal banknote, a rejection banknote, or a non-replenishment banknote; a recycle cassette for storing the medium recognized as the normal banknote; a reject cassette for storing the medium recognized as the rejection banknote; a utility cassette disposed in a lower portion of the main body, the utility cassette serving to store various types of mediums for universal purposes; a conveyance path for conveying the medium between the entrance for replenishment and recovery, the reception unit, the temporary holding unit, the identification unit, the recycle cassette, the reject cassette, and the utility cassette; and a control unit configured to control the conveyance path such that when the medium is replenished through the transit cassette, the medium recognized as the normal banknote by the identification unit, among the mediums stored in the transit cassette, is temporarily stored in the temporary holding unit, and among the mediums temporarily stored in the temporary holding unit, the medium recognized as the normal banknote by the identification unit is transferred to the transit cassette, wherein the control unit recognizes as the non-replenishment banknote, among replenishment banknotes transferred to the identification unit, mediums not to be replenished to the recycle cassette since the number of the mediums stored in the automated teller machine comes to satisfy a preset quantity due to a customer's deposit while a person of the management company goes to replenish mediums.

The main body may include: an upper body in which the reception unit, the temporary holding unit and the identification unit are provided, the entrance for replenishment and recovery being provided in a rear portion of the upper body; and a lower body in which the recycle cassette, the reject cassette and the utility cassette are provided.

The control unit may be configured to control the conveyance path such that the medium recognized as the rejection banknote by the identification unit, among the mediums stored in the transit cassette, is accommodated in the utility cassette.

The control unit may be configured to control the conveyance path such that when the medium stored in the recycle cassette is recovered to the transit cassette, among the mediums stored in the recycle cassette, the medium recognized as the normal banknote by the identification unit is temporarily stored in the temporary holding unit, and the medium recognized as the rejection banknote by the identification unit is accommodated in the reject cassette.

The control unit may be configured to control the conveyance path such that when the medium stored in the recycle cassette is recovered to the transit cassette, among the mediums stored in the temporary holding unit, the medium recognized as the normal banknote by the identification unit is recovered to the transit cassette, and the medium recognized as the rejection banknote by the identification unit is accommodated in the reject cassette.

The control unit may be configured to control the conveyance path such that when the medium is replenished through the transit cassette, among the mediums stored in the temporary holding unit, the medium recognized as the rejection banknote by the identification unit is accommodated in the utility cassette, and the medium recognized as the non-replenishment banknote by the identification unit is accommodated in the transit cassette.

The utility cassette may be disposed in a lower front portion of the main body and positioned at an upper side of the reject cassette.

In accordance with a second aspect of the present disclosure, there is provided a method of controlling an automated teller machine according to claim 8, comprising a replenishment introduction step of receiving a replenishment banknote from a replenishment/recovery transit cassette connected to a main body and transferring the received replenishment banknote to an identification unit; a replenishment identification step of identifying and recognizing the replenishment banknote transferred to the identification unit as a normal banknote, a rejection banknote or a non-replenishment banknote; a replenishment temporary storage step of transferring the medium recognized as the normal banknote by the identification unit to a temporary holding unit to be temporarily stored therein and transferring the medium recognized as the rejection banknote by the identification unit to a utility cassette disposed in a lower portion of the main body to be accommodated therein; a replenishment storage step of moving the medium temporarily stored in the temporary holding unit to the identification unit, transferring the medium recognized as the normal banknote by the identification unit to a recycle cassette to be accommodated therein, and transferring the medium recognized as the rejection banknote by the identification unit to the utility cassette to be accommodated therein; a recovery transfer step of transferring a medium stored in the recycle cassette to the identification unit; a recovery identification step of identifying and recognizing the medium transferred to the identification unit as a normal banknote or a rejection banknote; a recovery temporary storage step of temporarily storing the medium recognized as the normal banknote by the identification unit in the temporary holding unit and transferring the medium recognized as the rejection banknote by the identification unit to the reject cassette to be accommodated therein; and a recovery storage step of moving the medium temporarily stored in the temporary holding unit to the identification unit, recovering the medium recognized as the normal banknote by the identification unit through the replenishment/recovery transit cassette, and transferring the medium recognized as the rejection banknote by the identification unit to the reject cassette to be accommodated therein, wherein the replenishment identification step includes recognizing as the non-replenishment banknote, among replenishment banknotes transferred to the identification unit, mediums not to be replenished to the recycle cassette since the number of the mediums stored in the automated teller machine comes to satisfy a preset quantity due to a customer's deposit while a person of the management company goes to replenish mediums..

The replenishment storage step may include transferring the medium recognized as the non-replenishment banknote by the identification unit to the replenishment/recovery transit cassette to be recovered therein.

According to embodiments of the present disclosure, a normal banknote among the replenishment banknotes stored in the transit cassette can be temporarily stored in the temporary holding unit and then replenished in the recycle cassette, and a rejection banknote among the mediums transferred from the replenishment transit cassette can be transferred to the utility cassette in the lower portion of the main body.

According to embodiments of the present disclosure, the normal banknotes among the mediums stored in the recycle cassette can be temporarily stored in the temporary holding unit and then recovered to the transit cassette.

In addition, according to embodiments of the present disclosure, the transit cassette which contains no rejection banknote can be used again for replenishment transactions without separate settlement, which reduces costs.

In addition, according to embodiments of the present disclosure, it is possible to perform replenish and recover of mediums using one transit cassette.

### BRIEF DESCRIPTION OF THE DRAWINGS

FIG 1 is a diagram schematically illustrating a configuration of an automated teller machine according to one embodiment of the present disclosure.
FIG 2 is a state diagram illustrating a flow of a medium in a transit cassette when the medium is replenished through the transit cassette in the automated teller machine according to one embodiment of the present disclosure.
FIG 3 is a state diagram illustrating a flow of a medium in a temporary holding unit when the medium is replenished through the transit cassette in the automated teller machine according to one embodiment of the present disclosure.
FIG 4 is a state diagram illustrating a flow of a medium in the transit cassette when the medium is recovered through the transit cassette in the automated teller machine according to one embodiment of the present disclosure.
FIG 5 is a state diagram illustrating a flow of a medium in a temporary holding unit when the medium is recovered through the transit cassette in the automated teller machine according to one embodiment of the present disclosure.
FIG 6 is a flowchart schematically illustrating a method of controlling the automated teller machine according to one embodiment of the present disclosure

### DETAILED DESCRIPTION

Hereinafter, a configuration and operation according to an embodiment of the present disclosure will be described in detail with reference to the accompanying drawings.

Further, in describing the present disclosure, detailed descriptions of known configurations or functions may be omitted to clarify the present disclosure.

When an element is referred to as being 'connected' to or 'transferred' to another element, it should be understood that the element may be directly connected to or transferred to the other element, but that other elements may exist in the middle.

The terms used in the present disclosure are only used for describing specific embodiments, and are not intended to limit the present disclosure. Singular expressions include plural expressions unless the context clearly indicates otherwise.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

Hereinafter, a configuration of an automated teller machine 1 according to one embodiment of the present disclosure will be described in detail with reference to the accompanying drawings.

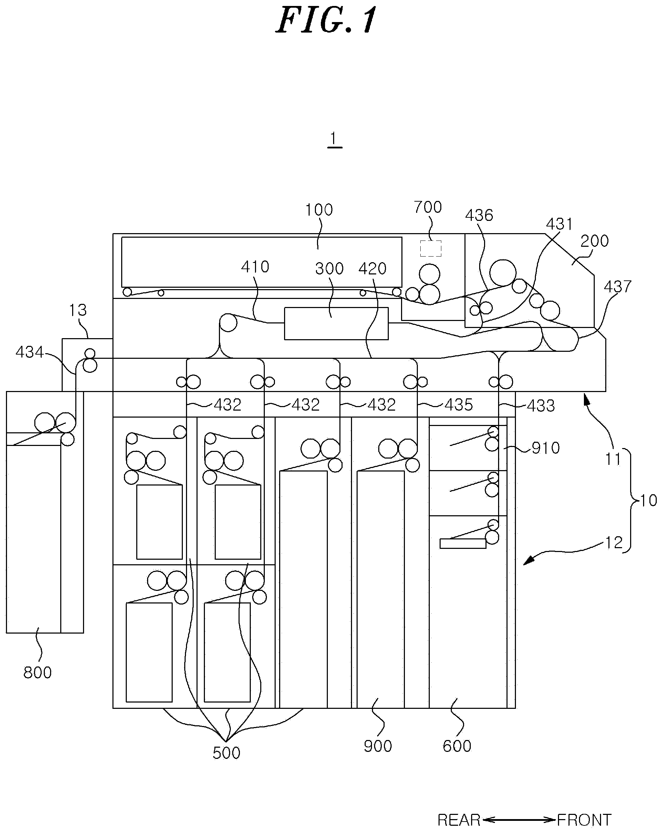

As shown in FIGS. 1 to 5, in the automated teller machine 1 according to one embodiment 1of the present disclosure, mediums stored in a transit cassette 800 may be temporarily stored in a temporary holding unit 100, and then a normal banknote may be replenished in a recycle cassette 500, and mediums in the recycle cassette 500 may be temporarily stored in the temporary holding unit 100 and then a normal banknote may be recovered to the transit cassette 800. In the present embodiment, the transit cassette 800 is a replenishment/recovery transit cassette through which both replenishment and recovery of mediums can be performed.

The automated teller machine 1 may include a main body 10, a temporary holding unit 100, a reception unit 200, an identification unit 300, a conveyance path, a recycle cassette 500, a reject cassette 600, a control unit 700, a deposit cassette 900, and a utility cassette 910.

The main body 10 may include a frame/housing that provides an overall appearance of the automated teller machine 1. The main body 10 may include an upper body 11 in which the temporary holding unit 100, the reception unit 200 and the identification unit 300 are provided, and a lower body 12 in which the recycle cassette 500, the reject cassette 600, the deposit cassette 900, and the utility cassette 910 are provided. The lower body 12 may be a safe that provides a storage space for mediums. Further, the deposit cassette 900 may store a medium deposited through the reception unit 200. The medium deposited in the reception unit 200 according to a customer's deposit request may be transferred into the deposit cassette 900 via the identification unit 300.

A reception unit 200, through which the deposit or withdrawal of mediums are made by a customer, may be provided in an upper front portion of the main body 10. Here, the front portion of the main body 10 may be understood as the side (right side in the drawing) through which deposit and withdrawal of a medium by a customer is performed. An entrance 13 for replenishment and recovery to which the transit cassette 800 can be connected may be provided at a lower side in a rear portion of the main body 10, and the temporary holding unit 100 may be provided at an upper side in the rear portion of the main body 10.

The temporary holding unit 100 may be used for temporarily storing mediums. The temporary holding unit 100 may be connected to an upper conveyance path 410 through a first branch conveyance path 431, which will be described later.

The reception unit 200 may provide a space in which the medium deposited by a customer is introduced, and may provide a space in which a medium to be withdrawn by a customer's request is taken out. The reception unit 200 may be connected to the first branch conveyance path 431 through a sixth branch conveyance path 436 to be described later. When a customer deposits a medium, the reception unit 200 may transmit the deposited medium to the identification unit 300 through the sixth branch conveyance path 436, the first branch conveyance path 431, and the upper conveyance path 410. In addition, the reception unit 200 may be connected through a seventh branch conveyance path 437 to a front-side connection point at which the upper conveyance path 410 and a lower conveyance path 420 are connected.

The identification unit 300 may recognize the medium as any one of a normal banknote, a rejection banknote, and a non-replenishment banknote by identifying whether the medium moving along the conveyance path has an abnormality. In this specification, mediums may be divided into normal banknotes, rejection banknotes, or non-replenishment banknotes. The normal banknote is a replenishment banknote to be replenished in the automated teller machine 1, or a recovery banknote to be recovered from the automated teller machine 1 to the transit cassette 800.

In addition, the rejection banknote is an abnormal banknote, and may be a damaged or forged banknote or paper other than a banknote. For example, the rejection banknote may be a torn banknote, a forged banknote, or a receipt. Further, the rejection banknote may include a normal banknote that was not damaged in the recycle cassette 500 and the transit cassette 800 but is damaged while moving along the conveyance path, and a normal banknote that was not damaged when stored in the temporary holding unit 100 but is damaged while moving along the conveyance path after taken out from the temporary holding unit 100.

Furthermore, the non-replenishment banknote is a normal banknote, and may be a medium that does not need to be replenished since a sufficient amount of medium, which satisfies a preset quantity, is stored in the automated teller machine 1. For example, the non-replenishment banknote may be a banknote, among the replenishment banknotes in the replenishment transit cassette 820, which is not replenished since the number of the mediums stored in the automated teller machine 1 comes to satisfy the preset quantity due to a customer's deposit while a person of a management company goes to replenish mediums.

The conveyance path may transfer mediums between the temporary holding unit 100, the identification unit 300, the reception unit 200, the recycle cassette 500, the reject cassette 600, the transit cassette 800, the deposit cassette 900, and the utility cassette 910. The conveyance path may include a driving roller, a driven roller, and a switch gate and the like for conveyance of the mediums. Further, the conveyance path may be driven by a motor (not shown), and may be controlled by the control unit 700. The conveyance path may include an upper conveyance path 410, a lower conveyance path 420, a first branch conveyance path 431, a second branch conveyance path 432, a third branch conveyance path 433, a fourth branch conveyance path 434, a fifth branch conveyance path 435, a sixth branch conveyance path 436 and a seventh branch conveyance path 437.

The upper conveyance path 410 may provide a moving path of mediums that are input/output to/from the identification unit 300. The upper conveyance path 410 may be connected to the lower conveyance path 420 to form a closed loop. The upper conveyance path 410 may be provided above the lower conveyance path 420. The first branch conveyance path 431 may branch from the upper conveyance path 410. The upper conveyance path 410 may transfer mediums, conveyed from the temporary holding unit 100 or the reception unit 200, to the lower conveyance path 420 via the identification unit 300, or may transfer mediums output from the identification unit 300 to the temporary holding unit 100, the reception unit 200 or the lower conveyance path 420.

The lower conveyance path 420 may be connected to the upper conveyance path 410 to form a closed loop. A plurality of second branch conveyance paths 432 may branch from the lower conveyance path 420. In the lower conveyance path 420, a branch point to the reject cassette 600 and a branch point to the recycle cassette 500 may be sequentially placed in the direction toward the front portion (where the reception service 200 is located) of the main body 10. The switch gate may be provided at each branch point of the lower conveyance path 420 to be operated under the control of the control unit 700. Through the adjustment of the switch gates under the control of the control unit 700, the lower conveyance path 420 may transfer mediums, conveyed from the upper conveyance path 410, to the recycle cassette 500, or may transfer mediums, conveyed from the recycle cassette 500, to the upper conveyance path 410.

The first branch conveyance path 431 may branch from the upper conveyance path 410 to provide a medium moving path between the upper conveyance path 410 and the temporary holding unit 100. The first branch conveyance path 431 may branch upwardly from the upper conveyance path 410. The sixth branch conveyance path 436 may branch from the first branch conveyance path 431. The switch gate operated under the control of the control unit 700 may be provided at a branch point of the first branch conveyance path 431 from which the sixth branch conveyance path 436 branches.

The second branch conveyance path 432 may branch from the lower conveyance path 420 to provide a medium moving path between the lower conveyance path 420 and the recycle cassette 500. The second branch conveyance path 432 may branch forward and downward from the lower conveyance path 420 with reference to the direction toward the front portion of the main body 10.

Through the adjustment of the switch gates under the control of the control unit 700, the third branch conveyance path 433 may provide a medium moving path between the lower conveyance path 420 and the reject cassette 600. The third branch conveyance path 433 may branch rearward and downward from the lower conveyance path 420 with reference to the direction toward the front portion of the main body 10.

The fourth branch conveyance path 434 may provide a medium moving path between a rear-side connection point of the upper conveyance path 410 and the lower conveyance path 420, and the entrance 13 for replenishment and recovery. For example, the fourth branch conveyance path 434 may transfer the medium received from the transit cassette 800 to the upper conveyance path 410, or transfer the medium received from the upper conveyance path 410 to the transit cassette 800.

The fifth branch conveyance path 435 may provide a medium moving path between the lower conveyance path 420 and the deposit cassette 900. Accordingly, the fifth branch conveyance path 435 may transfer the medium received from the deposit cassette 900 to the lower conveyance path 420, or may transfer the medium received from the lower conveyance path 420 to the deposit cassette 900.

The sixth branch conveyance path 436 may branch from the first branch conveyance path 431 to be connected to the reception unit 200. Through the adjustment of the switch gates under the control of the control unit 700, the sixth branch conveyance path 436 may provide a medium moving path between the reception unit 200 and the temporary holding unit 100, or provide a medium moving path between the reception unit 200 and the upper conveyance path 410.

The seventh branch conveyance path 437 may branch at the connection point between the upper conveyance path 410 and the lower conveyance path 420 to be connected to the reception unit 200. Through the adjustment of the switch gates under the control of the control unit 700, the seventh branch conveyance path 437 may transfer the medium conveyed from the reception unit 200 to the lower conveyance path 420.

At the branch point of the upper conveyance path 410 and the lower conveyance path 420, a switch gate for changing the medium moving path may be provided. In addition, at the branch point of the lower conveyance path 420 and the second branch conveyance path 432 and at the branch point of the lower conveyance path 420 and the fifth branch conveyance path 435, a switch gate (e.g., two-way switch gate) for changing the medium moving path may be provided. In addition, at the branch point of the lower conveyance path 420 and the third branch conveyance path 433, a switch gate (e.g., three-way switch gate) for changing the medium moving path may be provided. The switch gate may change its posture through rotation to selectively determine the medium moving path under the control of the control unit 700.

The recycle cassette 500 may store the medium recognized as a normal banknote by the identification unit 300. The medium stored in the recycle cassette 500 may be taken out through the transit cassette 800 when recovery is required, and may be taken out through the reception unit 200 when a customer requests withdrawal. A plurality of the recycle cassettes 500 may be provided. The mediums may be separated and stored in the plurality of recycle cassettes 500 for each type of banknote.

A sensor (not shown) may be provided in the recycle cassette 500 to maintain an appropriate amount of medium for each type of banknote in preparation for a customer's request for withdrawal. The sensor may detect in real time whether an appropriate amount of medium is stored in the recycle cassette 500, and notify a management company for the automated teller machine 1 whether it is necessary to replenish or recover the mediums in the recycle cassette 500.

The reject cassette 600 may store a damaged medium (e.g., a rejection banknote). The reject cassette 600 may be positioned in the lower front portion of the main body 10 to be positioned close to the transit cassette 800. Since the reject cassette 600 is positioned adjacent to the transit cassette 800, mediums can be quickly moved between the reject cassette 600 and the transit cassette 800.

The control unit 700 may be implemented by a calculation device including a microprocessor, a measuring device such as a sensor, and a memory. Since the implementation method is obvious to those skilled in the art, a detailed description thereof will be omitted. Hereinafter, the control method of the control unit 700 will be described in detail.

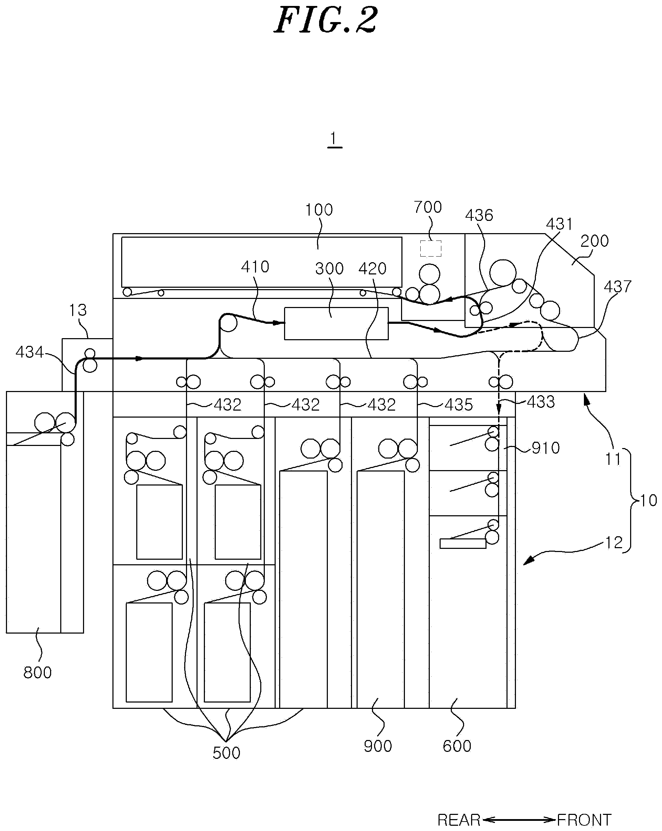

Referring to FIG 2, in order to replenish the recycle cassette 500 with the mediums in the transit cassette 800, the control unit 700 may control the conveyance path such that the mediums in the transit cassette 800 are replenished into the recycle cassette 500.

For example, the control unit 700 may control the fourth branch conveyance path 434 and the upper conveyance path 410 such that the mediums in the transit cassette 800 are transferred to the identification unit 300. In this case, the control unit 700 may control the conveyance path such that the mediums recognized in the identification unit 300 are transferred to different places depending on the state of each medium recognized by the identification unit 300

For example, when the medium is recognized as a normal banknote by the identification unit 300, the control unit 700 may control the upper conveyance path 410 and the first branch conveyance path 431 such that the medium recognized as a normal banknote in the identification unit 300 is transferred to the temporary holding unit 100 (indicated by a thick line in FIG. 2). In addition, when the medium is recognized as a rejection banknote by the identification unit 300, the control unit 700 may control the upper conveyance path 410, the lower conveyance path 420 and the third branch conveyance path 433 such that the medium recognized as a rejection banknote in the identification unit 300 is transferred to the utility cassette 910 (indicated by a dotted line in FIG. 2).

The medium accommodated in the temporary holding unit 100 may be replenished in the recycle cassette 500. To this end, the control unit 700 may control the conveyance path such that the medium in the temporary holding unit 100 is replenished the recycle cassette 500.

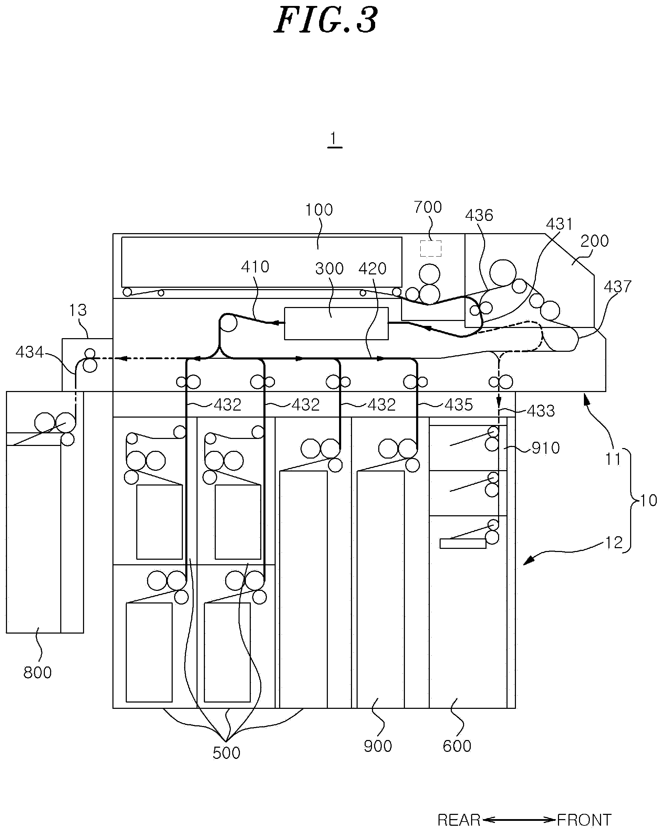

Referring to FIG 3, in order to replenish the medium in the temporary holding unit 100, the control unit 700 may control the first branch conveyance path 431 and the upper conveyance path 410 such that the medium in the temporary holding unit 100 is transferred to the identification unit 300. Further, the control unit 700 may control the conveyance path such that the mediums recognized in the identification unit 300 are transferred to different places depending on the state of each medium recognized by the identification unit 300

For example, when the medium is recognized as a normal banknote in the identification unit 300, the control unit 700 may control the upper conveyance path 410, the lower conveyance path 420, and the second branch conveyance path 432 such that the medium recognized as a normal banknote in the identification unit 300 is transferred to the recycle cassette 500 (indicated by a thick line in FIG. 3). In addition, when the medium is recognized as a rejection banknote by the identification unit 300, the control unit 700 may control the upper conveyance path 410, the lower conveyance path 420, and the third branch conveyance path 433 such that the medium recognized as a rejection banknote in the identification unit 300 is transferred to the utility cassette 910 (indicated by a dotted line in FIG. 3). Further, when the medium is recognized as a non-replenishment banknote by the identification unit 300, the control unit 700 may control the upper conveyance path 410 and the fourth branch conveyance path 434 such that the medium recognized as a non-replenishment banknote in the identification unit 300 is transferred to the transit cassette 800 (indicated by two-dot chain line in FIG 3).

When a medium stored in the recycle cassette 500 is to be recovered through the transit cassette 800, the control unit 700 may control the conveyance path such that the medium stored in the recycle cassette 500 is temporarily stored in the temporary holding unit 100 and then is recovered in the transit cassette 800.

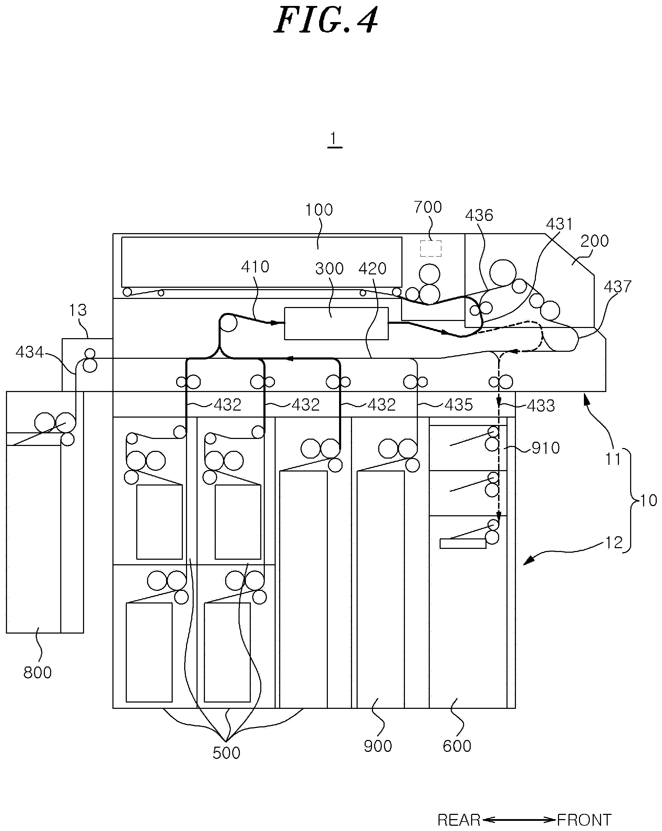

Referring to FIG 4, the control unit 700 may control the second branch conveyance path 432, the lower conveyance path 420, and the upper conveyance path 410 such that the medium stored in the recycle cassette 500 is transferred to the identification unit 300. Further, the control unit 700 may control the conveyance path such that the mediums recognized in the identification unit 300 are transferred to different places depending on the state of each medium recognized by the identification unit 300.

For example, when the medium is recognized as a normal banknote in the identification unit 300, the control unit 700 may control the upper conveyance path 410 and the first branch conveyance path 431 such that the medium recognized as a normal banknote in the identification unit 300 is transferred to the temporary holding unit 100 (indicated by a thick line in FIG 4). In addition, when the medium is recognized as a rejection banknote by the identification unit 300, the control unit 700 may control the upper conveyance path 410, the lower conveyance path 420, and the third branch conveyance path 433 such that the medium recognized as a rejection banknote by the identification unit 300 is transferred to the reject cassette 600 (indicated by a dotted line in FIG. 4).

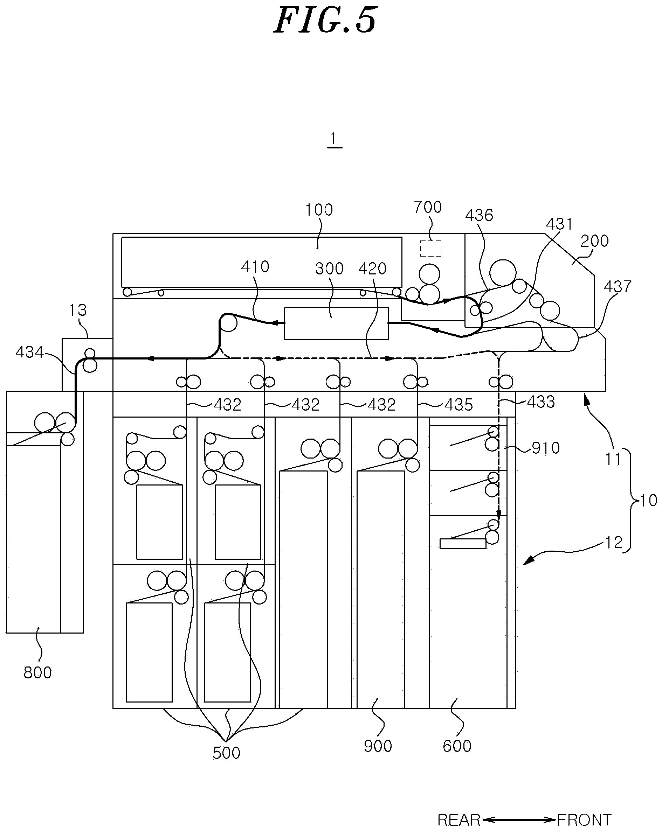

In this case, the control unit 700 may control the conveyance path such that the medium stored in the temporary holding unit 100 is recovered in the transit cassette 800. Referring to FIG. 5, the control unit 700 may control the upper conveyance path 410 and the first branch conveyance path 431 such that the medium stored in the temporary holding unit 100 is transferred to the identification unit 300. Further, when the medium is recognized as a normal banknote in the identification unit 300, the control unit 700 may control the upper conveyance path 410 and the fourth branch conveyance path 434 such that the medium recognized as a normal banknote in the identification unit 300 is transferred to the transit cassette 800 (indicated by a thick line in FIG 5). In addition, when the medium is recognized as a rejection banknote by the identification unit 300, the control unit 700 may control the upper conveyance path 410, the lower conveyance path 420, and the third branch conveyance path 433 such that the medium recognized as a rejection banknote by the identification unit 300 is transferred to the reject cassette 600 (indicated by a dotted line in FIG 5).

The utility cassette 910 may be understood as a cassette in which various types of mediums may be stored for universal purposes. The utility cassette 910 may be located in the lower front portion of the main body 10. Specifically, the utility cassette 910 may be positioned at an upper side of the reject cassette 600. The utility cassette 910 may receive a medium through a conveyance path branched from the third branch conveyance path 433.

Hereinafter, a control method of controlling the automated teller machine according to one embodiment of the present disclosure will be described.

Referring to FIGS. 2 to 6, the control method for the automated teller machine may control the automated teller machine so that mediums in the transit cassette 800 are temporarily stored in the temporary holding unit 100 and then a normal banknote is accommodated in the recycle cassette 500, and that mediums in the recycle cassette 500 are temporarily stored in the temporary holding unit 100 and then a normal banknote is recovered in the transit cassette 800.

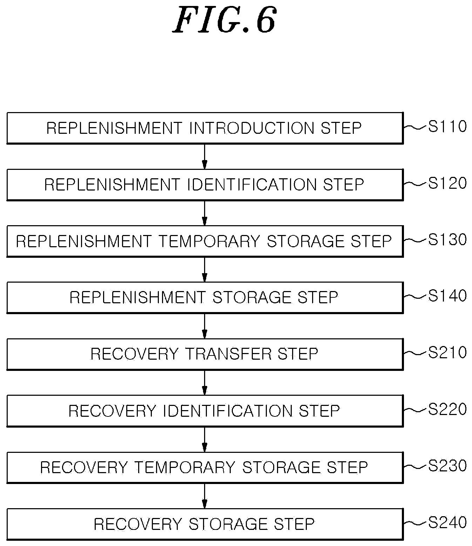

As shown in FIG 6, the control method for the automated teller machine may include a replenishment introduction step S110, a replenishment identification step S120, a replenishment temporary storage step S130, and a replenishment storage step S140, a recovery transfer step S210, a recovery identification step S220, a recovery temporary storage step S230, and a recovery storage step S240.

In the replenishment introduction step S110, in order to replenish the recycle cassette 500 with the replenishment banknote in the transit cassette 800, the replenishment banknote received from the transit cassette 800 may be transferred to the identification unit 300. In order to receive the replenishment banknote from the transit cassette 800 and transfer the replenishment banknote to the identification unit 300, the fourth branch conveyance path 434 and the upper conveyance path 410 may be used.

In the replenishment identification step S120, the replenishment banknote transferred to the identification unit 300 may be identified and recognized as a normal banknote or a rejection banknote. In addition, in the replenishment identification step S120, among the replenishment banknotes transferred to the identification unit 300, mediums not to be replenished since the number of the mediums stored in the automated teller machine 1 comes to satisfy the preset quantity due to a customer's deposit while a person of the management company goes to replenish mediums may be recognized as a non-replenishment banknote.

In the replenishment temporary storage step S130, the medium recognized as a normal banknote in the identification unit 300 may be transferred to the temporary holding unit 100, and the medium recognized as a rejection banknote in the identification unit 300 may be transferred to the utility cassette 910 installed in the lower portion of the main body 10.

In the replenishment storage step S140, the medium temporarily stored in the temporary holding unit 100 may be moved to the identification unit 300, and then the medium recognized as a normal banknote in the identification unit 300 may be transferred to the recycle cassette 500 to be accommodated therein. In order to transfer the medium recognized as a normal banknote to the recycle cassette 500, the upper conveyance path 410, the lower conveyance path 420, and the second branch conveyance path 432 may be used.

In addition, in the replenishment storage step S140, the medium temporarily stored in the temporary holding unit 100 may be moved to the identification unit 300, and then the medium recognized as a rejection banknote by the identification unit 300 may be transferred to the utility cassette 910 to be accommodated therein. In order to transfer the medium recognized as a rejection banknote to the utility cassette 910, the upper conveyance path 410, the lower conveyance path 420, and the third branch conveyance path 433 may be used.

In addition, in the replenishment storage step S140, the medium temporarily stored in the temporary holding unit 100 may be moved to the identification unit 300, and then the medium recognized a non-replenishment banknote by the identification unit 300 may be transferred to the transit cassette 800 to be accommodated therein. In order to transfer the medium recognized as a non-replenishment banknote to the transit cassette 800, the upper conveyance path 410 and the fourth branch conveyance path 434 may be used.

Meanwhile, in the recovery transfer step S210, a medium stored in the recycle cassette 500 may be transferred to the identification unit 300 in order to recover the medium in the recycle cassette 500 to the transit cassette 800.

In the recovery identification step S220, the medium transferred to the identification unit 300 may be discriminated and recognized as a normal banknote or a rejection banknote.

In the recovery temporary storage step S230, the medium recognized as a normal banknote in the identification unit 300 may be transferred to the temporary holding unit 100. In order to transfer the medium recognized as a normal banknote to the temporary holding unit 100, the upper conveyance path 410 and the first branch conveyance path 431 may be used.

Further, in the recovery temporary storage step S230, the medium recognized as a rejection banknote by the identification unit 300 may be transferred to the reject cassette 600. In order to transfer the medium recognized as a rejection banknote to the reject cassette 600, the upper conveyance path 410, the lower conveyance path 420, and the third branch conveyance path 433 may be used.

In the recovery storage step S240, the medium temporarily stored in the temporary holding unit 100 may be moved to the identification unit 300, and then the medium recognized as a normal banknote by the identification unit 300 may be recovered through the transit cassette 800, and the medium recognized as a rejection banknote by the identification unit 300 may be transferred to the reject cassette 600 to be accommodated therein.

The examples of the present disclosure have been described above as specific embodiments, but these are only examples, and the present disclosure is not limited thereto, and should be construed as having the widest scope according to the scope of the appended claims. A person skilled in the art may combine/substitute the disclosed embodiments to implement a pattern of a shape that is not disclosed, but it also does not depart from the scope of the appended claims.

## Claims

1. An automated teller machine comprising:
a main body (10) having an entrance (13) for replenishment and recovery for connecting a transit cassette (800);
a reception unit (200) for depositing or withdrawing of a medium;
a temporary holding unit (100) for temporarily storing the medium;
an identification unit (300) serving to identify whether a medium is a normal banknote, a rejection banknote, or a non-replenishment banknote;
a recycle cassette (500) for storing the medium recognized as the normal banknote;
a reject cassette (600) for storing the medium recognized as the rejection banknote;
a utility cassette (910) disposed in a lower portion of the main body (10), the utility cassette (910) serving to store various types of mediums for universal purposes;
a conveyance path for conveying the medium between the entrance (13) for replenishment and recovery, the reception unit (200), the temporary holding unit (100), the identification unit (300), the recycle cassette (500), the reject cassette (600), and the utility cassette (910); and
a control unit (700) configured to control the conveyance path such that when the medium is replenished through the transit cassette (800), the medium recognized as the normal banknote by the identification unit (300), among the mediums stored in the transit cassette (800), is temporarily stored in the temporary holding unit (100), and when the medium is recovered through the transit cassette (800) among the mediums temporarily stored in the temporary holding unit (100), the medium recognized as the normal banknote by the identification unit (300) is transferred to the transit cassette (800),
wherein the control unit (700) recognizes as the non-replenishment banknote, among replenishment banknotes transferred to the identification unit (300), mediums not to be replenished to the recycle cassette (500) since the number of the mediums stored in the automated teller machine comes to satisfy a preset quantity due to a customer's deposit while a person of management company goes to replenish mediums.

2. The automated teller machine of claim 1, wherein the main body (10) includes:
an upper body in which the reception unit (200), the temporary holding unit (100) and the identification unit (300) are provided, the entrance (13) for replenishment and recovery being provided in a rear portion of the upper body; and
a lower body in which the recycle cassette (500), the reject cassette (600) and the utility cassette (910) are provided.

3. The automated teller machine of claim 1, wherein the control unit (700) is configured to control the conveyance path such that the medium recognized as the rejection banknote by the identification unit (300), among the mediums stored in the transit cassette (800), is accommodated in the utility cassette (910).

4. The automated teller machine of claim 1, wherein the control unit (700) is configured to control the conveyance path such that when the medium stored in the recycle cassette (500) is recovered to the transit cassette (800), among the mediums stored in the recycle cassette (500), the medium recognized as the normal banknote by the identification unit (300) is temporarily stored in the temporary holding unit (100), and the medium recognized as the rejection banknote by the identification unit (300) is accommodated in the reject cassette (600).

5. The automated teller machine of claim 4, wherein the control unit (700) is configured to control the conveyance path such that when the medium stored in the recycle cassette (500) is recovered to the transit cassette (800), among the mediums stored in the temporary holding unit (100), the medium recognized as the normal banknote by the identification unit (300) is recovered to the transit cassette (800), and the medium recognized as the rejection banknote by the identification unit (300) is accommodated in the reject cassette (600).

6. The automated teller machine of claim 1, wherein the control unit (700) is configured to control the conveyance path such that when the medium is replenished through the transit cassette (800), among the mediums stored in the temporary holding unit (100), the medium recognized as the rejection banknote by the identification unit (300) is accommodated in the utility cassette (910), and the medium recognized as the non-replenishment banknote by the identification unit (300) is accommodated in the transit cassette (800).

7. The automated teller machine of claim 1, wherein the utility cassette (910) is disposed in a lower front portion of the main body (10) and positioned at an upper side of the reject cassette (600).

8. A method of controlling an automated teller machine, comprising:
a replenishment introduction step of receiving a replenishment banknote from a replenishment/recovery transit cassette (800) connected to a main body (10) and transferring the received replenishment banknote to an identification unit (300);
a replenishment identification step of identifying and recognizing the replenishment banknote transferred to the identification unit (300) as a normal banknote, a rejection banknote or a non-replenishment banknote;
a replenishment temporary storage step of transferring the medium recognized as the normal banknote by the identification unit (300) to a temporary holding unit (100) to be temporarily stored therein and transferring the medium recognized as the rejection banknote by the identification unit (300) to a utility cassette (910) disposed in a lower portion of the main body (10) to be accommodated therein;
a replenishment storage step of moving the medium temporarily stored in the temporary holding unit (100) to the identification unit (300), transferring the medium recognized as the normal banknote by the identification unit (300) to a recycle cassette (500) to be accommodated therein, and transferring the medium recognized as the rejection banknote by the identification unit (300) to the utility cassette (910) to be accommodated therein;
a recovery transfer step of transferring a medium stored in the recycle cassette (500) to the identification unit (300);
a recovery identification step of identifying and recognizing the medium transferred to the identification unit (300) as a normal banknote or a rejection banknote;
a recovery temporary storage step of temporarily storing the medium recognized as the normal banknote by the identification unit (300) in the temporary holding unit (100) and transferring the medium recognized as the rejection banknote by the identification unit (300) to the reject cassette (600) to be accommodated therein; and
a recovery storage step of moving the medium temporarily stored in the temporary holding unit (100) to the identification unit (300), recovering the medium recognized as the normal banknote by the identification unit (300) through the replenishment/recovery transit cassette (800), and transferring the medium recognized as the rejection banknote by the identification unit (300) to the reject cassette (600) to be accommodated therein,
wherein the replenishment identification step includes recognizing as the non-replenishment banknote, among replenishment banknotes transferred to the identification unit (300), mediums not to be replenished to the recycle cassette (500) since the number of the mediums stored in the automated teller machine comes to satisfy a preset quantity due to a customer's deposit while a person of management company goes to replenish mediums.

9. The method of claim 8, wherein the replenishment storage step includes transferring the medium recognized as the non-replenishment banknote by the identification unit (300) to the replenishment/recovery transit cassette (800) to be recovered therein.

## Patentansprüche

1. Geldautomat, umfassend:
einen Hauptkörper (10) mit einem Einlass (13) zum Nachfüllen und Zurückgewinnen zum Anschließen einer Transportkassette (800);
eine Aufnahmeeinheit (200) zum Einzahlen oder Abheben eines Mediums;
eine temporäre Halteeinheit (100) zum vorübergehenden Aufbewahren des Mediums;
eine Identifizierungseinheit (300), die dazu dient, zu identifizieren, ob ein Medium eine normale Banknote, eine zurückgewiesene Banknote oder eine nicht nachzufüllende Banknote ist;
eine Recyclingkassette (500) zum Aufbewahren des als normale Banknote erkannten Mediums;
eine Rückweisungskassette (600) zum Aufbewahren des Mediums, das als zurückgewiesene Banknote erkannt wurde;
eine Versorgungskassette (910), die in einem unteren Abschnitt des Hauptkörpers (10) angeordnet ist, wobei die Versorgungskassette (910) dazu dient, verschiedene Arten von Medien für universelle Zwecke aufzubewahren;
einen Transportweg zum Transportieren des Mediums zwischen dem Einlass (13) zum Nachfüllen und Zurückführen, der Aufnahmeeinheit (200), der vorübergehenden Halteeinheit (100), der Identifizierungseinheit (300), der Recyclingkassette (500), der Rückweisungskassette (600) und der Versorgungskassette (910); und
eine Steuereinheit (700), die so konfiguriert ist, dass sie den Transportweg so steuert, dass, wenn das Medium über die Transportkassette (800) nachgefüllt wird, das von der Identifizierungseinheit (300) als normale Banknote erkannte Medium unter den in der Transportkassette (800) aufbewahrten Medien vorübergehend in der vorübergehenden Halteeinheit (100) aufbewahrt wird, und, wenn das Medium über die Transportkassette (800)
unter den vorübergehend in der vorübergehenden Halteeinheit (100) aufbewahrten Medien zurückgeführt wird, das von der Identifizierungseinheit (300) als normale Banknote erkannte Medium in die Transportkassette (800) übertragen wird,
wobei die Steuereinheit (700) unter den an die Identifizierungseinheit (300) übertragenen Nachfüllbanknoten diejenigen Banknoten als nicht nachzufüllende Banknoten erkennt, die nicht in die Recyclingkassette (500) nachgefüllt werden sollen, da die Anzahl der im Geldautomaten aufbewahrten Banknoten aufgrund einer Kundeneinzahlung eine voreingestellte Menge erreicht, während eine Person der Verwaltungsgesellschaft die Banknoten nachfüllt.

2. Geldautomat nach Anspruch 1, wobei der Hauptkörper (10) umfasst:
einen oberen Körper, in dem die Aufnahmeeinheit (200), die vorübergehende Halteeinheit (100) und die Identifizierungseinheit (300) vorgesehen sind, wobei der Einlass (13) zum Nachfüllen und Entnehmen in einem hinteren Abschnitt des oberen Körpers vorgesehen ist; und
einen unteren Körper, in dem die Recyclingkassette (500), die Rückweisungskassette (600) und die Versorgungskassette (910) vorgesehen sind.

3. Geldautomat nach Anspruch 1, wobei die Steuereinheit (700) so konfiguriert ist, dass sie den Transportweg so steuert, dass das von der Identifizierungseinheit (300) als zurückgewiesene Banknote erkannte Medium unter den in der Transportkassette (800) aufbewahrten Medien in der Versorgungskassette (910) aufgenommen wird.

4. Geldautomat nach Anspruch 1, wobei die Steuereinheit (700) so konfiguriert ist, dass sie den Transportweg so steuert, dass, wenn das in der Recyclingkassette (500) aufbewahrte Medium in die Transportkassette (800) zurückgeführt wird, unter den in der Recyclingkassette (500) aufbewahrten Medien das von der Identifizierungseinheit (300) als normale Banknote erkannte Medium vorübergehend in der vorübergehenden Halteeinheit (100) aufbewahrt wird und das von der Identifizierungseinheit (300) als zurückgewiesene Banknote erkannte Medium in der Rückweisungskassette (600) aufgenommen wird.

5. Geldautomat nach Anspruch 4, wobei die Steuereinheit (700) so konfiguriert ist, dass sie den Transportweg so steuert, dass, wenn das in der Recyclingkassette (500) aufbewahrte Medium in die Transportkassette (800) zurückgeführt wird, unter den in der vorübergehenden Halteeinheit (100) aufbewahrten Medien das von der Identifizierungseinheit (300) als normale Banknote erkannte Medium in die Transportkassette (800) zurückgeführt wird und das von der Identifizierungseinheit (300) als zurückgewiesene Banknote erkannte Medium in der Rückweisungskassette (600) aufgenommen wird.

6. Geldautomat nach Anspruch 1, wobei die Steuereinheit (700) so konfiguriert ist, dass sie den Transportweg so steuert, dass, wenn das Medium über die Transportkassette (800) nachgefüllt wird, unter den in der vorübergehenden Halteeinheit (100) aufbewahrten Medien das von der Identifizierungseinheit (300) als zurückgewiesene Banknote erkannte Medium in der Versorgungskassette (910) aufgenommen wird und das von der Identifizierungseinheit (300) als nicht nachzufüllende Banknote erkannte Medium in der Transportkassette (800) aufgenommen wird.

7. Geldautomat nach Anspruch 1, wobei die Versorgungskassette (910) in einem unteren vorderen Abschnitt des Hauptkörpers (10) angeordnet und an einer oberen Seite der Rückweisungskassette (600) positioniert ist.

8. Verfahren zum Steuern eines Geldautomaten, umfassend:
einen Nachfüllschritt zum Einführen, bei dem eine Nachfüllbanknote aus einer mit einem Hauptkörper (10) verbundenen Nachfüll-/Zurückführungs-Transportkassette (800) aufgenommen und die aufgenommene Nachfüllbanknote an eine Identifizierungseinheit (300) übertragen wird;
einen Nachfüllschritt zum Identifizieren, bei dem die an die Identifizierungseinheit (300) übertragene Nachfüllbanknote als normale Banknote, zurückgewiesene Banknote oder nicht nachzufüllende Banknote identifiziert und erkannt wird;
einen Nachfüllschritt zum vorübergehenden Aufbewahren, bei dem das von der Identifizierungseinheit (300) als normale Banknote erkannte Medium zu einer vorübergehenden Halteeinheit (100) übertragen wird, um dort vorübergehend aufbewahrt zu werden, und das von der Identifizierungseinheit (300) als zurückgewiesene Banknote erkannte Medium zu einer Versorgungskassette (910) transportiert wird, die in einem unteren Abschnitt des Hauptkörpers (10) angeordnet ist, um dort aufgenommen zu werden;
einen Nachfüllschritt zum Aufbewahren, bei dem das in der vorübergehenden Halteeinheit (100) vorübergehend aufbewahrte Medium zur Identifizierungseinheit (300) bewegt wird, das von der Identifizierungseinheit (300) als normale Banknote erkannten Medium in Recyclingkassette (500) übertragen wird, um dort aufgenommen zu werden, und das von der Identifizierungseinheit (300) als zurückgewiesene Banknote erkannten Medium in die Versorgungskassette (910) übertragen wird, um dort aufgenommen zu werden;
einen Zurückführungsschritt zum Übertragen, bei dem ein in der Recyclingkassette (500) aufbewahrtes Medium zur Identifizierungseinheit (300) übertragen wird;
einen Zurückführungssschritt zum Identifizieren, bei dem das an die Identifizierungseinheit (300) übertragenen Medium als normale Banknote oder als zurückgewiesene Banknote identifiziert und erkannt wird;
einen Zurückführungschritt zum vorübergehenden Aufbewahren, bei dem das von der Identifizierungseinheit (300) als normale Banknote erkannte Medium vorübergehend in der vorübergehenden Halteeinheit (100) aufbewahrt wird und das von der Identifizierungseinheit (300) als zurückgewiesene Banknote erkannte Medium in die Rückweisungskassette (600) übertragen wird, um dort aufgenommen zu werden; und
einen Zurückführungsschritt zum Aufbewahren, bei dem das vorübergehend in der vorübergehenden Halteeinheit (100) aufbewahrte Medium zur Identifizierungseinheit (300) bewegt wird, wobei das von der Identifizierungseinheit (300) als normale Banknote erkannte Medium über die Nachfüll-/Zurückführungstransportkassette (800) zurückgeführt wird, und das von der Identifizierungseinheit (300) als zurückgewiesene Banknote erkannten Medium in die Rückweisungskassette (600) übertragen wird, um dort aufgenommen zu werden,
wobei der Nachfüllschritt zum Identifizieren umfasst, dass unter den zur Identifizierungseinheit (300) übertragenen Nachfüllbanknoten diejenigen Medien als nicht nachzufüllende Banknoten erkannt werden, die nicht in die Recyclingkassette (500) nachgefüllt werden sollen, da die Anzahl der im Geldautomaten aufbewahrten Medien aufgrund einer Einzahlung eines Kunden eine voreingestellte Menge erreicht, während eine Person der Verwaltungsgesellschaft die Medien nachfüllt.

9. Verfahren nach Anspruch 8, wobei der Nachfüllschritt zum Aufbewahren das Übertragen des Mediums, das von der Identifizierungseinheit (300) als nicht nachzufüllende Banknote erkannt wurde, in die Nachfüll-/Zurückführungstransportkassette (800), umfasst, um dort zurückgeführt zu werden.

## Revendications

1. Guichet automatique bancaire comprenant :
un corps principal (10) ayant une entrée (13) destinée au réapprovisionnement et à la récupération, pour le raccordement d'une cassette de transit (800) ;
une unité de réception (200) destinée au dépôt ou au retrait d'un support ;
une unité de stockage temporaire (100) destinée à stocker temporairement le support ;
une unité d'identification (300) qui sert à identifier si un support est un billet de banque normal, un billet de banque rejeté, ou un billet de banque de non-réapprovisionnement ;
une cassette de recyclage (500) destinée à stocker le support reconnu comme un billet de banque normal ;
une cassette de rejet (600) destinée à stocker le support reconnu comme un billet de banque rejeté ;
une cassette à usage général (910) disposée dans une partie inférieure du corps principal (10), la cassette à usage général (910) servant à stocker différents types de supports à usage universel ;
un trajet d'acheminement destiné à acheminer le support entre l'entrée (13) destinée au réapprovisionnement et à la récupération, l'unité de réception (200), l'unité de stockage temporaire (100), l'unité d'identification (300), la cassette de recyclage (500), la cassette de rejet (600), et la cassette à usage général (910) ; et
une unité de commande (700) configurée pour commander le trajet d'acheminement de sorte que, lorsque le support est réapprovisionné par le biais de la cassette de transit (800), le support reconnu comme un billet de banque normal par l'unité d'identification (300), parmi les supports stockés dans la cassette de transit (800), soit stocké temporairement dans l'unité de stockage temporaire (100), et, lorsque le support est récupéré par le biais de la cassette de transit (800), parmi les supports stockés temporairement dans l'unité de stockage temporaire (100), le support reconnu comme un billet de banque normal par l'unité d'identification (300) soit transféré vers la cassette de transit (800),
dans lequel l'unité de commande (700) reconnaît comme billets de banque de non-réapprovisionnement, parmi les billets de banque de réapprovisionnement transférés vers l'unité d'identification (300), les supports qui ne doivent pas être réapprovisionnés dans la cassette de recyclage (500) lorsque le nombre de supports stockés dans le guichet automatique bancaire satisfait une quantité prédéfinie due au dépôt d'un client pendant qu'une personne de la société de gestion effectue un réapprovisionnement en supports.

2. Guichet automatique bancaire selon la revendication 1, dans lequel le corps principal (10) comprend :
un corps supérieur dans lequel l'unité de réception (200), l'unité de stockage temporaire (100) et l'unité d'identification (300) sont prévues, l'entrée (13) destinée au réapprovisionnement et à la récupération étant prévue dans une partie arrière du corps principal ; et
un corps inférieur dans lequel la cassette de recyclage (500), la cassette de rejet (600) et la cassette à usage général (910) sont prévues.

3. Guichet automatique bancaire selon la revendication 1, dans lequel l'unité de commande (700) est configurée pour commander le trajet d'acheminement de sorte que le support reconnu comme un billet de banque rejeté par l'unité d'identification (300), parmi les supports stockés dans la cassette de transit (800), soit placé dans la cassette à usage général (910).

4. Guichet automatique bancaire selon la revendication 1, dans lequel l'unité de commande (700) est configurée pour commander le trajet d'acheminement de sorte que, lorsque le support stocké dans la cassette de recyclage (500) est récupéré vers la cassette de transit (800), parmi les supports stockés dans la cassette de recyclage (500), le support reconnu comme un billet de banque normal par l'unité d'identification (300) soit stocké temporairement dans l'unité de stockage temporaire (100), et que le support reconnu comme un billet de banque rejeté par l'unité d'identification (300) soit placé dans la cassette de rejet (600).

5. Guichet automatique bancaire selon la revendication 4, dans lequel l'unité de commande (700) est configurée pour commander le trajet d'acheminement de sorte que, lorsque le support stocké dans la cassette de recyclage (500) est récupéré vers la cassette de transit (800), parmi les supports stockés dans l'unité de stockage temporaire (100), le support reconnu comme un billet de banque normal par l'unité d'identification (300) soit récupéré vers la cassette de transit (800), et que le support reconnu comme un billet de banque rejeté par l'unité d'identification (300) soit placé dans la cassette de rejet (600).

6. Guichet automatique bancaire selon la revendication 1, dans lequel l'unité de commande (700) est configurée pour commander le trajet d'acheminement de sorte que, lorsque le support est réapprovisionné par le biais de la cassette de transit (800), parmi les supports stockés dans l'unité de stockage temporaire (100), le support reconnu comme un billet de banque rejeté par l'unité d'identification (300) soit placé dans la cassette à usage général (910), et que le support reconnu comme un billet de banque de non-réapprovisionnement par l'unité d'identification (300) soit placé dans la cassette de transit (800).

7. Guichet automatique bancaire selon la revendication 1, dans lequel la cassette à usage général (910) est disposée dans une partie avant inférieure du corps principal (10) et positionnée au niveau d'un côté supérieur de la cassette de rejet (600).

8. Procédé de commande d'un guichet automatique bancaire, comprenant :
une étape d'introduction de réapprovisionnement qui consiste à recevoir un billet de banque de réapprovisionnement en provenance d'une cassette de transit de réapprovisionnement/récupération (800) raccordée à un corps principal (10) et à transférer le billet de banque de réapprovisionnement reçu vers une unité d'identification (300) ;
une étape d'identification de réapprovisionnement qui consiste à identifier et reconnaître le billet de banque de réapprovisionnement transféré vers l'unité d'identification (300) comme un billet de banque normal, un billet de banque rejeté ou un billet de banque de non-réapprovisionnement ;
une étape de stockage temporaire de réapprovisionnement qui consiste à transférer le support reconnu comme un billet de banque normal par l'unité d'identification (300) vers une unité de stockage temporaire (100) afin d'être stocké temporairement dans celle-ci, et à transférer le support reconnu comme un billet de banque rejeté par l'unité d'identification (300) vers une cassette à usage général (910) disposée dans une partie inférieure du corps principal (10) afin d'être placé dans celle-ci ;
une étape de stockage de réapprovisionnement qui consiste à déplacer le support stocké temporairement dans l'unité de stockage temporaire (100) vers l'unité d'identification (300), à transférer le support reconnu comme un billet de banque normal par l'unité d'identification (300) vers une cassette de recyclage (500) afin d'être placé dans celle-ci, et à transférer le support reconnu comme un billet de banque rejeté par l'unité d'identification (300) vers la cassette à usage général (910) afin d'être placé dans celle-ci ;
une étape de transfert de récupération qui consiste à transférer un support stocké dans la cassette de recyclage (500) vers l'unité d'identification (300) ;
une étape d'identification de récupération qui consiste à identifier et reconnaître le support transféré vers l'unité d'identification (300) comme un billet de banque normal ou un billet de banque rejeté ;
une étape de stockage temporaire de récupération qui consiste à stocker temporairement le support reconnu comme un billet de banque normal par l'unité d'identification (300) dans l'unité de stockage temporaire (100) et à transférer le support reconnu comme un billet de banque rejeté par l'unité d'identification (300) vers la cassette de rejet (600) afin d'être placé dans celle-ci ; et
une étape de stockage de récupération qui consiste à déplacer le support stocké temporairement dans l'unité de stockage temporaire (100) vers l'unité d'identification (300), à récupérer le support reconnu comme un billet de banque normal par l'unité d'identification (300) par le biais de la cassette de transit de réapprovisionnement/récupération (800), et à transférer le support reconnu comme un billet de banque rejeté par l'unité d'identification (300) vers la cassette de rejet (600) afin d'être placé dans celle-ci,
dans lequel l'étape d'identification de réapprovisionnement comprend la reconnaissance comme billets de banque de non-réapprovisionnement, parmi les billets de banque de réapprovisionnement transférés vers l'unité d'identification (300), des supports qui ne doivent pas être réapprovisionnés vers la cassette de recyclage (500) lorsque le nombre de supports stockés dans le guichet automatique bancaire satisfait une quantité prédéfinie due au dépôt d'un client pendant qu'une personne de la société de gestion effectue un réapprovisionnement en supports.

9. Procédé selon la revendication 8, dans lequel l'étape de stockage de réapprovisionnement comprend le transfert du support reconnu comme un billet de banque de non-réapprovisionnement par l'unité d'identification (300) vers la cassette de transit de réapprovisionnement/récupération (800) afin d'être récupéré dans celle-ci.
